(19) **Europäisches Patentamt / European Patent Office / Office européen des brevets**

(11) **EP 3 631 511 B1**

(12) **FASCICULE DE BREVET EUROPEEN**

(45) Date de publication et mention de la délivrance du brevet:
**21.04.2021 Bulletin 2021/16**

(51) Int Cl.:
***G01S 17/88*** *(2006.01)*    ***G01S 17/02*** *(2020.01)*
***G01S 17/42*** *(2006.01)*    ***G01S 17/87*** *(2020.01)*
***A63B 71/06*** *(2006.01)*

(21) Numéro de dépôt: **18725567.4**

(22) Date de dépôt: **28.05.2018**

(86) Numéro de dépôt international:
**PCT/EP2018/063934**

(87) Numéro de publication internationale:
**WO 2018/219867 (06.12.2018 Gazette 2018/49)**

(54) **SYSTEME DE DETECTION DE FRANCHISSEMENT DE LIGNE DE BUT**

SYSTEM ZUR ERKENNUNG DER ÜBERQUERUNG EINER ZIELLINIE

SYSTEM FOR DETECTING THE CROSSING OF A GOAL LINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.05.2017 FR 1754801**

(43) Date de publication de la demande:
**08.04.2020 Bulletin 2020/15**

(73) Titulaire: **VBSV**
**56700 Kervignac (FR)**

(72) Inventeur: **BRUCHEC, Serge**
**56700 Kervignac (FR)**

(74) Mandataire: **Novagraaf Technologies**
**12 place des Halles Saint Louis**
**56100 Lorient (FR)**

(56) Documents cités:
**EP-A1- 2 191 878**    **DE-A1-102007 049 147**
**DE-A1-102012 020 376**    **US-A1- 2006 247 076**

# Description

## Domaine technique

La présente invention se rapporte au domaine des technologies destinées à la détection du franchissement d'une ligne de but. Ces technologies sont couramment désignées par le terme anglo-saxon « goal line technology ». Elles sont destinées à assister l'arbitre pour déterminer si, de façon certaine, un ballon a entièrement franchi la ligne de but. Ces technologies sont destinées à être utilisées dans les sports de balle, tels que le football ou le handball.

## Etat de la technique

Plusieurs technologies existent actuellement sur le marché. Une première technologie, couramment appelée stéréovision ou mesure stéréoscopique, consiste à réaliser la détection par une pluralité de caméras vidéo à grande vitesse capturant des images des cages de but de chaque côté du terrain. Les caméras sont connectées à un ordinateur central qui détermine en continu la position du ballon. Si le ballon franchit entièrement la ligne de but, l'ordinateur central transmet un signal à un dispositif porté par l'arbitre, se présentant par exemple sous la forme d'une montre, lequel dispositif émet alors un signal sonore. L'arbitre peut ensuite immédiatement valider le but.

Une deuxième technologie connue consiste à créer un champ magnétique particulier au niveau de la cage de but, de part et d'autre, ou de chaque côté de la ligne de but en enterrant des fils électriques parcourus par du courant dans cette zone du terrain de jeu et à équiper le ballon d'un capteur destiné à mesurer ce champ magnétique. Le capteur du ballon mesure le champ magnétique notamment lorsque le ballon pénètre dans la zone du but et envoie des données relatives à cette mesure à un ordinateur central. Ce dernier détermine ensuite à partir de ces données si le ballon a franchi ou non la ligne de but. Dans l'affirmative, l'ordinateur central transmet un signal à un dispositif porté par l'arbitre qui émet alors un signal sonore

Une troisième technologie connue de DE102007049147 A1 concerne un système et un procédé de détection des acteurs sportifs sur un terrain de sport qui peut en particulier être utilisé pour la détection de buts. Le système comporte des caméras et des LIDARs.

## Résumé de l'invention

L'invention vise à proposer une technologie alternative peu onéreuse qui soit abordable pour le monde amateur. L'invention a également pour objet de proposer un système ne nécessitant aucune modification de la cage de but, et plus particulièrement aucun ajout de matériel sur la cage de but.

Un autre objet de l'invention est de proposer un système ne requérant aucune installation de matériel dans l'aire de jeu ou aucune modification de celle-ci.

Un autre objet de l'invention est de proposer un système qui soit insensible aux conditions climatiques, aux conditions d'éclairage du terrain de jeu ou à la couleur du ballon.

Un autre objet de l'invention est de proposer un système qui soit capable de détecter un franchissement entier ou partiel de la ligne de but et qui soit donc applicable à des sports de balle tels que le football ou le handball (dans lesquels le but n'est validé que si la balle a entièrement franchi la ligne de but) ou d'autres sports n'exigeant qu'un franchissement partiel de la ligne de but.

Selon l'invention, il est proposé une technologie employant au moins un lidar disposé derrière la ligne de but et balayant selon un mouvement de rotation un plan vertical derrière la ligne de but. Les signaux délivrés par le lidar sont ensuite traités pour détecter si un ballon a traversé le plan vertical balayé par le lidar et déterminer la position du ballon par rapport à la ligne de but.

Plus particulièrement, l'invention concerne un système de détection du franchissement d'une ligne de but d'une cage de but par un ballon, ladite cage de but s'étendant verticalement au-dessus de la ligne de but, un plan vertical, dit plan de ligne de but, étant défini à partir d'un bord arrière de la ligne de but, lequel système est caractérisé en ce qu'il comprend :

- au moins un lidar agencé pour balayer, au moyen d'un faisceau laser et selon un mouvement de rotation, un plan vertical, dit plan de détection, parallèle audit plan de ligne de but et disposé derrière la cage de but, ledit plan de détection étant distant du plan de ligne de but d'une distance inférieure au diamètre du ballon, ledit lidar générant un signal de mesure, et
- une unité de traitement pour traiter ledit signal de mesure de sorte à détecter la présence d'un ballon à l'intérieur d'une zone, dite de détection, du plan de détection délimitée par la projection orthogonale de la cage de but sur le plan de détection et déterminer la position du ballon par rapport à la ligne de but.

Selon l'invention, le lidar émet un faisceau laser balayant le plan de détection. Lorsque le faisceau laser rencontre un obstacle, il est rétrodiffusé en un ou plusieurs faisceaux retour par ledit obstacle. Au moins une partie des signaux rétrodiffusés sont renvoyés vers le lidar puis traités par l'unité de traitement de sorte à détecter la présence et la position d'un obstacle dans la zone de détection. La détection d'un ballon dans la zone de détection revient à rechercher, dans les résultats de mesure, une portion de cercle ou un arc dans la zone de détection selon la fréquence de balayage du lidar et de la vitesse du ballon. Le diamètre du cercle se rapportant à cette portion de cercle ou la forme de l'arc permet de déterminer la position du ballon par rapport à la ligne de but.

Selon un mode de réalisation particulier, la distance entre le plan de ligne de but et le plan de détection est sensiblement égale au rayon du ballon.

Selon un mode de réalisation particulier, le système comporte un unique lidar qui est centré par rapport à la cage de but.

Dans ce mode de réalisation, la fréquence de balayage du lidar est supérieure ou égale à 100 Hertz.

Avantageusement, elle est supérieure à 200 Hz ou plus. Une telle fréquence peut être simulée en augmentant le nombre de lidars décalés angulairement. Deux lidars 100 Hz dont les faisceaux laser sont déphasés de $\pi$ sont équivalents à un lidar 200 Hz.

Selon un autre mode de réalisation, le système comporte n lidars balayant ledit plan de détection et disposés dans le sol, avec n≥2.

La multiplication des lidars permet non seulement d'augmenter la fréquence de balayage du plan de détection mais également d'augmenter la robustesse du système face aux occlusions (présence de joueurs dans la zone de détection) en augmentant le nombre de points de vue de la scène.

Dans ce mode de réalisation, les n lidars sont avantageusement répartis à intervalles réguliers le long d'une ligne parallèle à la ligne de but.

Par ailleurs, les n lidars sont agencés pour que leurs faisceaux laser soient déphasés (ou décalés angulairement) de $\dfrac{2\pi}{n}$.

Dans ce mode de réalisation, la fréquence de balayage de chacun des n lidars est avantageusement supérieure ou égale à 100/n Hertz.

Selon un mode de réalisation particulier, le lidar ou les lidars est ou sont disposé (s) dans une goulotte enterrée dans le sol, à l'intersection entre le plan de détection et le sol.

Avantageusement, le système comprend en outre un couvercle, transparent au laser, sensiblement plan pour refermer, dans sa partie supérieure, la goulotte. Le couvercle est avantageusement recouvert d'un polymère souple pour éviter que les joueurs ne se blessent au contact de celui-ci.

Selon un mode de réalisation particulier, le système comporte au moins des premier et deuxième lidars aptes à balayer respectivement des premier et deuxième plans de détection, chacun desdits premier et deuxième plans de détection étant distant du plan de ligne de but d'une distance propre (d1,d2) inférieure au diamètre du ballon.

Dans ce mode de réalisation, les premier et deuxième lidars sont centrés par rapport à la cage de but.

Par ailleurs, lesdits premier et deuxième lidars sont avantageusement agencés pour que leurs faisceaux laser soient synchronisés ou en phase, c'est-à-dire ne soient pas décalés angulairement.

La fréquence de balayage des premier et deuxième lidars est supérieure ou égale à 100 Hertz. Elle est avantageusement supérieure à 200 Hz ou plus.

Selon un mode de réalisation, le système comprend en outre, pour chaque plan de détection, des éléments réfléchissants sécants avec le plan de détection au niveau du bord supérieur et des bords latéraux de la zone de détection. Ces éléments réfléchissants permettent de délimiter la zone de détection et cette zone de détection est alors visible sur les signaux de mesure du lidar. Les éléments réfléchissants sont disposés sur le filet monté à l'arrière de la cage de but.

Selon un mode de réalisation avantageux, le système est complété par une caméra pour aider l'unité de traitement à détecter le ballon dans le ou les plans de détection. Dans ce mode de réalisation, le système comprend au moins une caméra disposée à l'arrière de la cage de but et connectée à l'unité de traitement, ladite au moins une caméra étant agencée pour capturer des images de la cage de but et de la scène en amont de la cage de but et l'unité de traitement est agencée pour traiter le ou les signaux de mesure provenant du ou des lidar(s) et les images provenant de ladite caméra pour détecter la présence d'un ballon à l'intérieur de ladite zone de détection.

Ces images fournissent des informations additionnelles sur la scène de la cage de but pour discriminer le ballon du reste de la scène.

Selon un mode de réalisation particulier, la caméra est une caméra vidéo à grande vitesse dont la fréquence de capture est supérieure ou égale à 120 Hz

Selon un autre mode de réalisation, la caméra est une caméra 3D dont la fréquence de capture est supérieure à 30 Hz

D'autres caractéristiques et avantages pourront encore apparaître à l'homme du métier à la lecture des modes de réalisation ci-dessous, illustrés par les figures annexées, donnés à titre illustratif.

**Brève description des figures**

- La figure 1 est une vue schématique en perspective du système de l'invention selon un premier mode de réalisation comprenant un seul lidar ;

- La figure 2 représente une section schématique du système selon le plan de coupe II-II de la figure 1 ;

- La figure 3 est une vue schématique de dessus illustrant le franchissement complet de la ligne de but par un ballon B ;

- La figure 4 est un schéma illustrant les résultats du lidar du système dans le cas de la figure 3 ;

- La figure 5 est une vue schématique de dessus illustrant le franchissement partiel de la ligne de but par un ballon B ;

- La figure 6 est un schéma illustrant les résultats du lidar du système dans le cas de la figure 5 ;

- La figure 7 est une vue schématique en perspective du système de l'invention selon un deuxième mode de réalisation comprenant deux lidars alignés parallèlement à la ligne de but ;

- La figure 8 représente une section schématique du système selon le plan de coupe VIII-VIII de la figure 7 ;

- La figure 9 est une vue schématique en perspective du système de l'invention selon un troisième mode de réalisation comprenant deux lidars alignés selon une droite perpendiculaire à la ligne de but ;

- La figure 10 représente une section schématique du système selon le plan de coupe X-X de la figure 9 ;

- La figure 11 est une vue schématique en perspective du système de l'invention selon un quatrième mode de réalisation comprenant un lidar et une caméra; et

- La figure 12 représente une section schématique du système selon le plan de coupe XII-XII de la figure 11.

## Description détaillée de l'invention

L'invention sera plus particulièrement décrite dans le cadre du football sans qu'on puisse y voir une quelconque limitation de la portée du brevet à ce sport.

Selon l'invention, il est proposé de détecter le franchissement de la ligne de but au moyen d'un ou plusieurs lidars associés, dans un mode de réalisation avantageux, à une caméra vidéo ou une caméra 3D.

Dans la présente invention, un lidar désigne un dispositif opto-électronique de mesure de distance comprenant un émetteur laser et un récepteur apte à recevoir les signaux rétrodiffusés par un obstacle présent dans le champ de vision du lidar. Plus particulièrement, on utilise au moins un lidar à balayage agencé pour balayer, par un mouvement de rotation, un plan vertical, appelé plan de détection, derrière la cage de but.

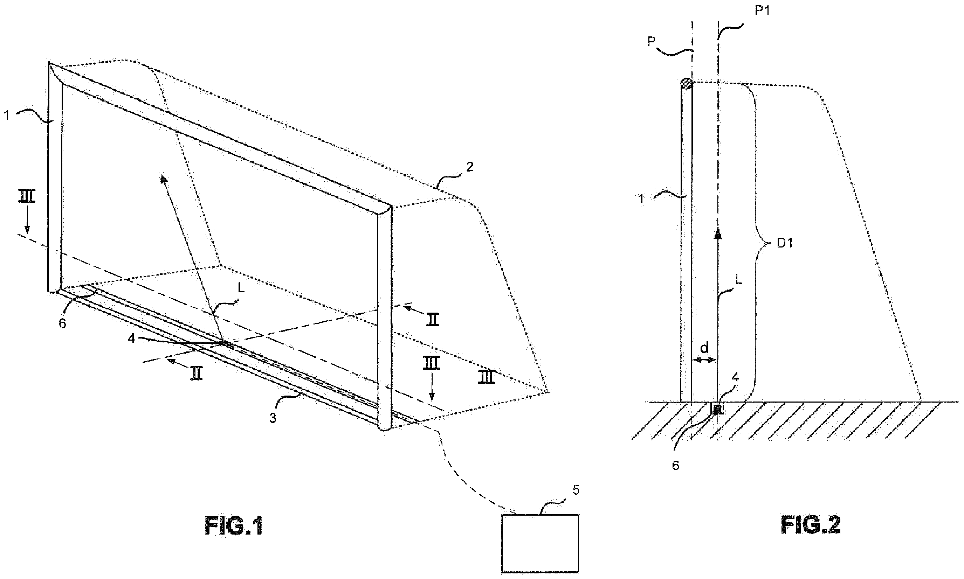

**Les figures 1 et 2** représentent respectivement une vue d'ensemble en perspective et une vue en coupe d'un système selon un premier mode de réalisation de l'invention, ledit système étant monté sur un terrain de football derrière une cage de but 1 équipée d'un filet 2. La cage de but 1 s'étend verticalement au-dessus de la ligne de but 3.

Dans ce mode de réalisation, le système comprend un lidar 4 enterré dans le sol et apte à balayer, au moyen d'un faisceau laser L et selon un mouvement de rotation, un plan vertical appelé plan de détection P1 derrière la cage de but 1. Le lidar 4 est avantageusement disposé dans une goulotte 6 enterrée dans le sol et s'étendant parallèlement à la ligne de but 3 et il est centré par rapport à la cage de but.

La goulotte 6 est équipée d'un couvercle étanche transparent aux rayons laser sensiblement plan pour refermer la goulotte dans sa partie supérieure. Le couvercle est avantageusement recouvert d'un polymère souple pour éviter que les joueurs ne se blessent au contact de celui-ci.

Si on désigne par P le plan s'étendant verticalement à partir du bord arrière de la ligne de but 3, le plan de détection P1 est distant du plan P d'une distance d prédéterminée non nulle et inférieure au diamètre D du ballon. Le plan P est appelé plan de ligne de but et le bord arrière de la ligne de but désigne le bord externe de la ligne de but en contact avec l'extérieur du terrain. Le plan P est aussi le plan vertical ayant pour génératrice la droite correspondant au bord arrière de la ligne de but.

Dans ce mode de réalisation, la distance d entre les plans P et P1 est égale à la moitié du diamètre D du ballon (soit d=D/2).

Le lidar 4 est destiné à balayer le plan P1 de manière à détecter la présence et la position de tout obstacle à l'intérieur du plan P1. Le lidar 4 émet des faisceaux laser L. Lorsqu'un faisceau laser rencontre un obstacle dans le plan P1, il est rétrodiffusé en un ou plusieurs faisceaux retour par ledit obstacle. Au moins une partie des signaux rétrodiffusés sont renvoyés vers le lidar. Le lidar 4 génère alors un signal de mesure qui est traité par une unité de traitement 5 pour détecter la présence et la position d'un ballon dans le plan P1, et plus particulièrement dans une zone D1 du plan P1 qui est délimitée par la projection orthogonale de la cage de but sur le plan P1. La détection d'un ballon dans la zone D1 revient à rechercher dans cette zone une portion de cercle ou, de manière plus générale, un arc. Cet arc est formé par les points d'impact du faisceau laser avec le ballon. La forme de l'arc dépend essentiellement de la fréquence de balayage du lidar et de la vitesse de déplacement du ballon. Lorsque le ballon se déplace selon une direction sensiblement transverse au plan de détection P1, le faisceau laser L entre en contact avec le ballon en une pluralité de points appartenant à des sections transversales distinctes du ballon. L'arc formé par ces points de contact n'est donc pas exactement une portion de cercle.

La présence d'un tel arc dans les résultats de mesure du lidar permet, sous réserve de validation par des moyens complémentaires, d'en déduire la présence d'un ballon dans la zone de détection et les paramètres de cet arc vont permettre de déterminer la position du ballon par rapport à la ligne de but. Ceci sera décrit plus en détail dans la suite de la présente description.

Selon un mode de réalisation de l'invention, la détection d'un franchissement complet de la ligne de but revient à détecter une portion de cercle dont le diamètre D' est compris dans un intervalle [A,B]. Les bornes A et B désignent respectivement le diamètre minimal et le diamètre maximal du cercle. La valeur de B est une valeur proche de D (diamètre du ballon).

Les valeurs A et B sont fonction de la fréquence de balayage du lidar et de la distance d. Des tests ont montré que, pour un ballon de foot de diamètre D=22 cm et une distance d=D/2, plus la fréquence de balayage est élevée, plus la valeur de diamètre minimal est élevée et plus l'intervalle [A,B] est restreint. Une opération de réglage du système est réalisée à l'installation de celui-ci pour déterminer les bornes A et B de l'intervalle et calibrer le système. Si la détection consiste à rechercher un arc, l'opération d'apprentissage sert à déterminer les paramètres de l'arc à rechercher. Cette opération de réglage peut être manuelle ou automatique. Cette opération peut être éventuellement une opération d'apprentissage.

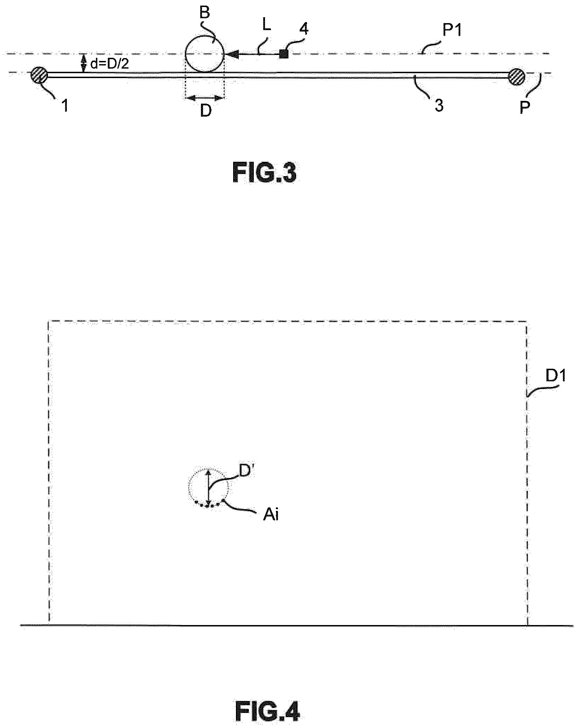

**La figure 3** est une vue schématique de dessus illustrant le franchissement complet de la ligne de but 3 par un ballon B de diamètre D dans le cas du système des figures 1 et 2 et **la figure 4** est un schéma illustrant les résultats de mesure du lidar 4 dans ce cas.

Les points Ai correspondent aux points d'impact entre le faisceau laser émis par le lidar et le ballon au cours d'un balayage. Les points Ai forment un arc correspondant à la forme du ballon. Comme indiqué précédemment, étant donné que le ballon peut se déplacer transversalement au plan de détection P1 entre deux points d'impact, il se peut que l'arc ne corresponde pas exactement à un arc de cercle.

Dans l'exemple de la figure 4, les points d'impact Ai forme un arc de cercle appartenant à un cercle (dessiné en traits pointillés) de diamètre D'. Si le diamètre D' est compris dans l'intervalle [A,B] prédéfini, l'unité de traitement 5 peut alors en déduire avec une forte probabilité que l'obstacle détecté par le lidar est un ballon et que celui-ci a franchi entièrement la ligne de but.

Bien entendu, dans le cas de fréquences de balayage élevées, les résultats obtenus sur les balayages précédents ou suivants peuvent servir à confirmer le résultat obtenu sur le balayage courant ou à augmenter la probabilité associée à ce résultat. Il est à noter que le ballon ne renvoie pas (par rétrodiffusion) tous les faisceaux laser reçus vers le lidar 4. Les faisceaux laser qui sont proches de la tangente au ballon ne sont pas renvoyés vers le lidar. L'arc de cercle ne comporte donc qu'un nombre limité de points.

Le nombre de points Ai dépend de la fréquence de balayage du lidar, de la vitesse du ballon et de la position angulaire du faisceau laser au moment du passage du ballon à travers le plan P1. La fréquence de balayage du lidar est donc avantageusement supérieure à 100 Hz pour obtenir, en cas de détection d'une portion de cercle, un nombre de points suffisant pour le calcul du diamètre du cercle correspondant.

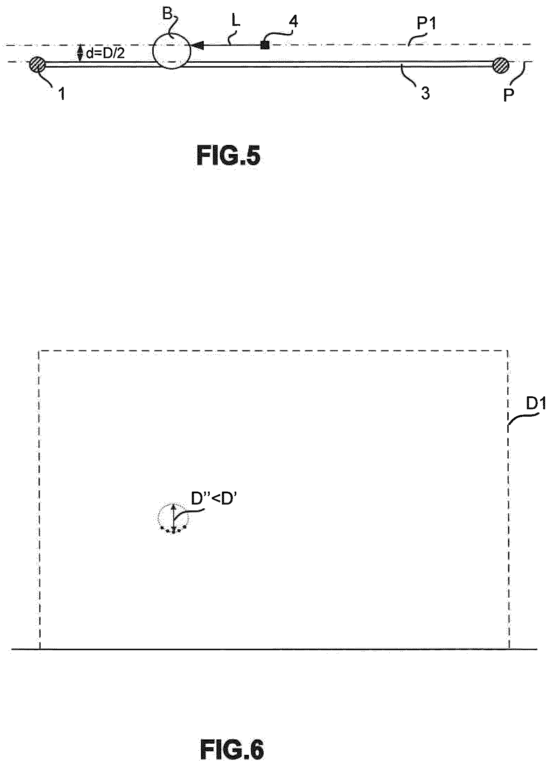

Si les points Ai forment un arc de cercle dont le diamètre D" est inférieur à A, cela signifie que le ballon n'a pas entièrement franchi la ligne de but ou pas encore franchi la ligne de but au cours de ce balayage. Ce cas est illustré par les **figures 5 et 6.** Cela peut aussi signifier que l'obstacle détecté n'est pas un ballon de foot. Des moyens complémentaires, qui seront présentés plus en détail dans un autre mode de réalisation, peuvent alors servir à décrypter la scène de la cage de but et confirmer la présence du ballon ou d'un autre obstacle, tel que la main d'un joueur, dans le plan de détection.

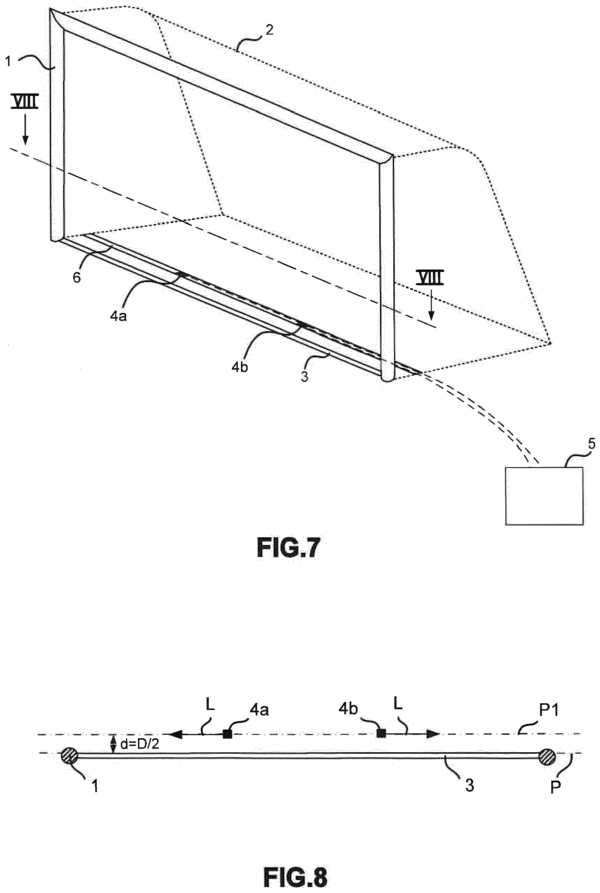

La fréquence de balayage du lidar est de préférence élevée pour augmenter le nombre de points Ai et faciliter l'interprétation du signal de mesure du lidar. Cette fréquence est avantageusement supérieure à 200 Hz. Cette fréquence de balayage peut être simulée en augmentant le nombre de lidars décalés angulairement. Deux lidars 100 Hz dont les faisceaux laser sont décalés angulairement de π sont équivalents à un lidar 200 Hz. Ce cas sera illustré en référence aux figures 7 et 8.

**Les figures 7 et 8** illustrent un second mode de réalisation dans lequel le système comporte deux lidars 4a et 4b balayant le plan de détection P1. Les deux lidars sont disposés dans la goulotte 6 et sont reliés ensemble à l'unité de traitement 5. Les faisceaux laser de ces deux 2 lidars sont de préférence décalés angulairement de π de manière à simuler une fréquence de balayage qui est double par rapport au premier mode de réalisation (un seul lidar).

L'unité de traitement 5 détermine la présence d'un ballon dans la zone de détection D1 et la position du ballon par rapport à la ligne de but à partir des signaux de mesure délivrés par les lidars.

De manière générale, le système de l'invention peut comporter n lidars balayant le plan P1, avec n≥2. Les n lidars sont avantageusement disposés à intervalles réguliers le long d'une ligne parallèle à la ligne de but et ils sont avantageusement agencés pour que leurs faisceaux laser soient décalés angulairement de $\dfrac{2\pi}{n}$.

Un tel agencement des lidars revient à multiplier par n la fréquence de balayage.

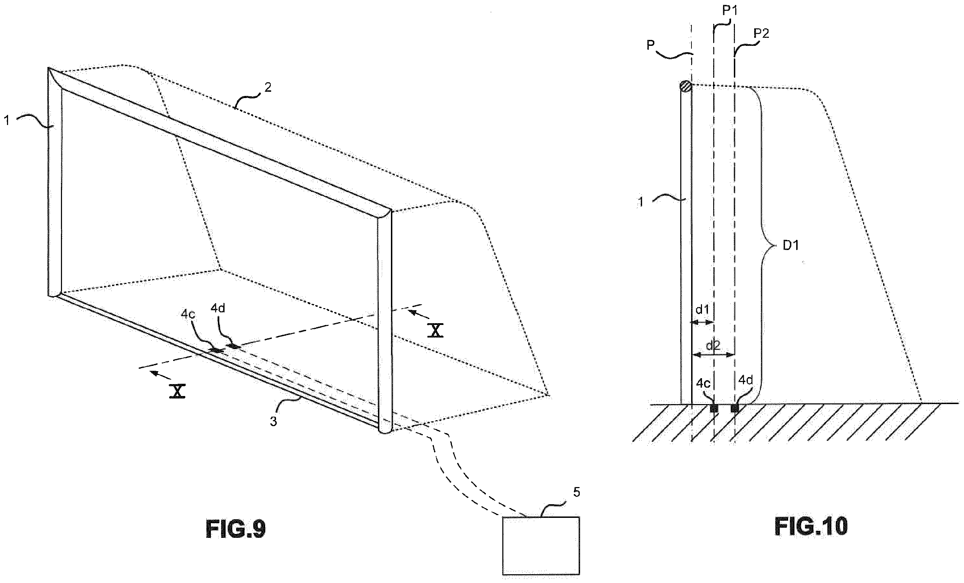

**Les figures 9 et 10** illustrent un autre mode de réalisation dans lequel le système comporte deux lidars 4c et 4d balayant respectivement des plans de détection P1 et P2 distincts distants du plan P. La distance entre les plans P1 et P est égale à d1 et la distance entre les plans P2 et P est égale à d2, avec d1<d2<D. Les lidars 4c et 4d sont disposés l'un derrière l'autre et sont connectés à l'unité de traitement 5.

Dans ce mode de réalisation, les lidars 4c et 4d sont centrés par rapport à la cage de but.

Avantageusement, ils sont agencés pour balayer les plans P1 et P2 de manière synchronisée (pas de déphasage).

L'unité de traitement 5 traite les signaux de mesure provenant des lidars 4c et 4d pour détecter la présence d'un ballon dans la zone de détection et déterminer si ce ballon a franchi entièrement la ligne de but. L'un des lidars peut servir à confirmer le résultat de l'autre lidar ou à augmenter la précision ou la probabilité du résultat.

A titre d'exemple, les lidars 4c et 4d peuvent être positionnés de telle sorte que d1=D/4 et d2=D/2.

De manière générale, le système de l'invention peut comporter n lidars balayant un ou plusieurs plan(s) de détection distant(s) du plan P d'une distance inférieure à D, avec n≥2. Dans chaque plan de détection, les lidars peuvent être disposés à intervalles réguliers le long d'une ligne au niveau du sol. Les m lidars balayant un même plan de détection (avec m≤n) sont avantageusement agencés pour que leurs faisceaux laser soient déphasés de $\dfrac{2\pi}{m}$ alors que les faisceaux des lidars présents dans un même plan orthogonal aux plans de détection sont avantageusement synchronisés (en phase).

Selon un mode de réalisation particulier (non représenté), pour chaque plan de détection, des éléments réfléchissants sécants avec le ou les plan(s) de détection sont montés sur le filet 2 pour que la zone de détection D1 soit visible sur le signal de mesure des lidars. Les éléments réfléchissants sont montés sur la partie du filet sécante avec le plan de détection (derrière les deux poteaux et la barre transversale de la cage de but) pour délimiter la zone de détection D1. Les éléments réfléchissants sont alors employés pour réfléchir les faisceaux laser lorsque ces derniers atteignent le filet à proximité des poteaux et de la barre transversale de la cage de but. Les éléments réfléchissants sont alors détectés comme des obstacles au faisceau laser et apparaissent en tant que tels dans le signal de mesure délivré par le lidar. Le périmètre de la zone de détection D1 qui est délimitée, en partie supérieure et en parties latérales, par ces éléments réfléchissants et en partie inférieure par le sol, est donc défini dans le signal de mesure issu du lidar. Il manque uniquement la portion de périmètre correspondant aux éléments réfléchissants ne pouvant être atteints par le faisceau laser en raison de la présence d'un obstacle.

Comme indiqué précédemment, il peut être avantageux de compléter le système pour aider l'unité de traitement 5 à interpréter le signal de mesure du ou des lidar(s) du système.

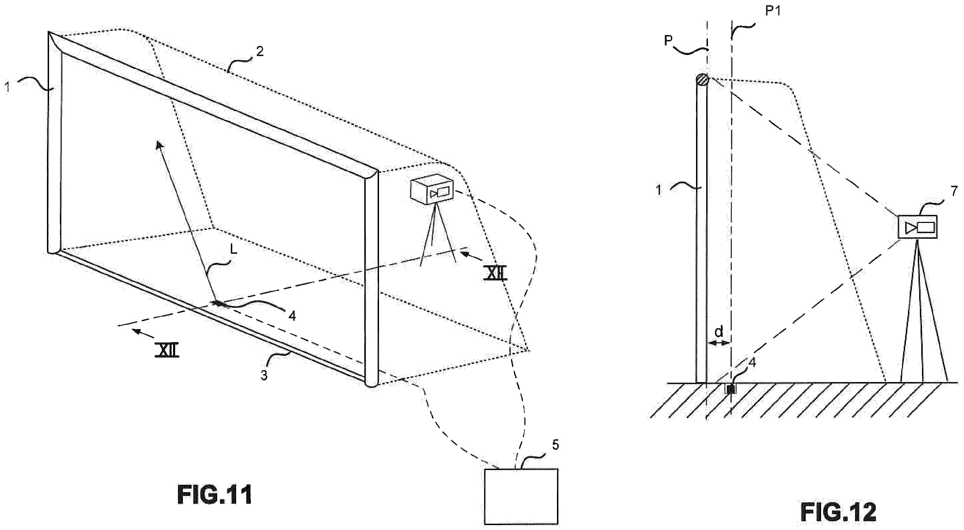

Selon un autre mode de réalisation avantageux illustré par **les figures 11 et 12,** le système comprend en outre au moins une caméra 7 disposée à l'arrière de la cage de but 1 et connectée à l'unité de traitement 5 pour aider l'unité de traitement à déterminer la présence d'un ballon dans la zone de détection.

La caméra 7 est disposée derrière le filet 2. Elle est agencée pour capturer des images de la scène de la cage de but. Elle est avantageusement centrée par rapport à la cage de but et disposée à mi-hauteur par rapport à la barre transversale de la cage de but.

Selon un mode particulier, le filet 2 en fond de cage de but est vertical (alors qu'il est oblique sur les figures 1 à 12 fournies à titre d'exemple) pour que la caméra 7 soit, si nécessaire, au plus près de la scène de la cage de but tout en restant protégée par le filet.

L'unité de traitement 5 est agencée pour traiter le signal de mesure en provenance du lidar 4 et les images en provenance de la caméra 7 afin de détecter la présence d'un ballon à l'intérieur de la zone de détection D1 et sa position par rapport à la ligne de but.

La caméra 7 est par exemple une caméra vidéo à grande vitesse ayant une fréquence supérieure ou égale à 120Hz. En variante, la caméra 7 est une caméra 3D, telle que par exemple une caméra infrarouge ou une caméra temps de vol ayant par exemple une fréquence supérieure ou égale à 30Hz.

Les images issues de la caméra fournissent des données supplémentaires sur la scène englobant la cage de but. L'exploitation de ces données permet alors d'avoir des indications sur l'environnement autour du ballon, telles que la présence de joueurs dans la cage de but et d'améliorer l'interprétation du signal de mesure provenant du lidar.

Le système peut bien entendu être complété par un dispositif lumineux, disposé à proximité de la cage de but, qui s'éclaire lorsque l'unité de traitement 5 détermine que le ballon a entièrement franchi la ligne de but. Il peut également comprendre un dispositif sonore qui émet un signal sonore lorsque le ballon a entièrement franchi la ligne de but.

Les modes de réalisation décrits ci-dessus ont été donnés à titre d'exemple. Il est évident pour l'homme de l'art qu'ils peuvent être modifiés, notamment quant au nombre de lidars ou de caméras 3D, à leurs positions et/ou à leurs fréquences de fonctionnement.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l'invention.

## Revendications

1. Système de détection du franchissement d'une ligne de but (3) d'une cage de but (1) par un ballon, ladite cage de but s'étendant verticalement au-dessus de la ligne de but, un plan vertical, dit plan de ligne de but (P), étant défini à partir d'un bord arrière de la ligne de but (3), lequel système est **caractérisé en ce qu'**il comprend :

   - au moins un lidar (4 ;4a,4b ;4c,4d) agencé pour balayer, au moyen d'un faisceau laser (L) et selon un mouvement de rotation, un plan vertical, dit plan de détection (P1 ;P2), parallèle audit plan de ligne de but (P) et disposé derrière la cage de but, ledit plan de détection étant distant du plan de ligne de but d'une distance (d ; d1, d2) inférieure au diamètre (D) du ballon, ledit lidar générant un signal de mesure, et
- une unité de traitement (5) pour traiter ledit signal de mesure de sorte à détecter la présence d'un ballon à l'intérieur d'une zone, dite de détection (D1), du plan de détection délimitée par la projection orthogonale de la cage de but sur le plan de détection et déterminer la position du ballon par rapport à la ligne de but.

2. Système selon la revendication 1, **caractérisé en ce que** la distance (d) entre le plan de ligne de but (P) et le plan de détection (P1 ;P2) est sensiblement égale à la moitié du diamètre (D/2) du ballon.

3. Système selon la revendication 1 ou 2, **caractérisé en ce qu'**il comporte un lidar (4) centré par rapport à la cage de but (1).

4. Système selon la revendication 3, **caractérisé en ce que** la fréquence de balayage du lidar (4) est supérieure ou égale à 100 Hertz.

5. Système selon la revendication 1 ou 2, **caractérisé en ce qu'**il comporte n lidars (4a,4b) balayant ledit plan de détection (P1) et disposés dans le sol, avec n≥2.

6. Système selon la revendication 5, **caractérisé en ce que** les n lidars (4a, 4b) sont répartis à intervalles réguliers le long d'une ligne parallèle à la ligne de but.

7. Système selon la revendication 5 ou 6, **caractérisé en ce que** les lidars (4a, 4b) sont agencés pour que leurs faisceaux laser soient déphasés de $\dfrac{2\pi}{n}$.

8. Système selon l'une quelconque des revendications 5 à 7, **caractérisé en ce que** la fréquence de balayage de chacun des n lidars (4a,4b) est supérieure ou égale à 100/n Hertz.

9. Système selon la revendication 1 ou 2, **caractérisé en ce qu'**il comporte au moins des premier et deuxième lidars (4c,4d) aptes à balayer respectivement des premier et deuxième plans de détection (P1,P2), chacun desdits premier et deuxième plans de détection étant distant du plan de ligne de but d'une distance propre (d1,d2) inférieure au diamètre (D) du ballon.

10. Système selon la revendication 9, **caractérisé en ce que** les premier et deuxième lidars (4c,4d) sont centrés par rapport à la cage de but (1).

11. Système selon la revendication 9 ou 10, **caractérisé en ce que** les premier et deuxième lidars (4c,4d) sont agencés pour que leurs faisceaux laser soient synchronisés.

12. Système selon l'une quelconque des revendications 9 à 11, **caractérisé en ce que** la fréquence de balayage des premier et deuxième lidars (4c,4d) est supérieure ou égale à 100 Hertz.

13. Système selon l'une quelconque des revendications précédentes, **caractérisé en ce qu'**il comprend en outre au moins une caméra (7) disposée à l'arrière de la cage de but et connectée à l'unité de traitement (5), ladite au moins une caméra étant agencée pour capturer des images de la cage de but
et **en ce que** l'unité de traitement (5) est agencée pour traiter le ou les signaux de mesure provenant du ou des lidar(s) et les images provenant de ladite caméra pour détecter la présence d'un ballon à l'intérieur de ladite zone de détection.

14. Système selon la revendication 13, **caractérisé en ce que** ladite au moins une caméra est une caméra vidéo rapide dont la fréquence de capture est supérieure ou égale à 120 Hz.

15. Système selon la revendication 13, **caractérisé en ce que** ladite au moins une caméra est une caméra 3D dont la fréquence de capture est supérieure ou égale à 30 Hz.

**Patentansprüche**

1. System zur Detektion der Überquerung einer Torlinie (3) eines Torkastens (1) durch einen Ball, wobei sich der Torkasten vertikal über der Torlinie erstreckt, wobei eine vertikale Ebene, die Torlinienebene (P), ausgehend von einem hinteren Rand der Torlinie (3) definiert ist, wobei das System **dadurch gekennzeichnet ist, dass** es Folgendes umfasst:

    - mindestens ein Lidar (4; 4a, 4b; 4c, 4d), das angeordnet ist, mittels eines Laserstrahls (L) und mit einer Drehbewegung eine vertikale Ebene, die Detektionsebene (P1; P2), abzutasten, die parallel zur Torlinienebene (P) verläuft und hinter dem Torkasten angeordnet ist, wobei die Detektionsebene um einen Abstand (d; d1, d2) von der Torlinienebene entfernt ist, der kleiner als der Durchmesser (D) des Balls ist, wobei das Lidar ein Messsignal erzeugt, und
    - eine Verarbeitungseinheit (5) zur Verarbeitung des Messsignals, um das Vorhandensein eines Balls innerhalb eines Detektionsbereichs (D1) der Detektionsebene zu detektieren, der von der Orthogonalprojektion des Torkastens auf der Detektionsebene begrenzt ist, und die Position des Balls zur Torlinie zu bestimmen.

**2.** System nach Anspruch 1, **dadurch gekennzeichnet, dass** der Abstand (d) zwischen der Torlinienebene (P) und der Detektionsebene (P1; P2) im Wesentlichen gleich der Hälfte des Durchmessers (D/2) des Balls ist.

**3.** System nach Anspruch 1 oder 2, **dadurch gekennzeichnet, dass** es ein Lidar (4) aufweist, das bezogen auf den Torkasten (1) zentriert ist.

**4.** System nach Anspruch 3, **dadurch gekennzeichnet, dass** die Abtastfrequenz des Lidars (4) größer als oder gleich 100 Hertz ist.

**5.** System nach Anspruch 1 oder 2, **dadurch gekennzeichnet, dass** es n Lidare (4a, 4b) aufweist, die die Detektionsebene (P1) abtasten und im Boden angeordnet sind, wobei n ≥ 2.

**6.** System nach Anspruch 5, **dadurch gekennzeichnet, dass** die n Lidare (4a, 4b) in regelmäßigen Abständen entlang einer Linie verteilt sind, die parallel zur Torlinie verläuft.

**7.** System nach Anspruch 5 oder 6, **dadurch gekennzeichnet, dass** die Lidare (4a, 4b) so angeordnet sind, dass ihre Laserstrahlen um $2\pi/n$ phasenverschoben sind.

**8.** System nach einem der Ansprüche 5 bis 7, **dadurch gekennzeichnet, dass** die Abtastfrequenz jedes der n Lidare (4a, 4b) größer als oder gleich 100/n Hertz ist.

**9.** System nach Anspruch 1 oder 2, **dadurch gekennzeichnet, dass** es mindestens ein erstes und zweites Lidar (4c, 4d) aufweist, die geeignet sind, eine erste bzw. zweite Detektionsebene (P1, P2) abzutasten, wobei jede von der ersten und zweiten Detektionsebene um einen eigenen Abstand (d1, d2) von der Torlinienebene entfernt ist, der kleiner als der Durchmesser (D) des Balls ist.

**10.** System nach Anspruch 9, **dadurch gekennzeichnet, dass** das erste und zweite Lidar (4c, 4d) bezogen auf den Torkasten (1) zentriert sind.

**11.** System nach Anspruch 9 oder 10, **dadurch gekennzeichnet, dass** das erste und zweite Lidar (4c, 4d) so angeordnet sind, dass ihre Laserstrahlen synchronisiert sind.

**12.** System nach einem der Ansprüche 9 bis 11, **dadurch gekennzeichnet, dass** die Abtastfrequenz des ersten und zweiten Lidars (4c, 4d) größer als oder gleich 100 Hertz ist.

**13.** System nach einem der vorhergehenden Ansprüche, **dadurch gekennzeichnet, dass** es ferner mindestens eine Kamera (7) umfasst, die hinter dem Torkasten angeordnet und mit der Verarbeitungseinheit (5) verbunden ist, wobei die mindestens eine Kamera angeordnet ist, Bilder vom Torkasten aufzunehmen, und dadurch, dass die Verarbeitungseinheit (5) angeordnet ist, das oder die Messsignale von dem oder den Lidar(en) und die Bilder von der Kamera zu verarbeiten, um das Vorhandensein eines Balls innerhalb des Detektionsbereichs zu detektieren.

**14.** System nach Anspruch 13, **dadurch gekennzeichnet, dass** die mindestens eine Kamera eine Hochgeschwindigkeits-Videokamera ist, deren Aufnahmefrequenz größer als oder gleich 120 Hz ist.

**15.** System nach Anspruch 13, **dadurch gekennzeichnet, dass** die mindestens eine Kamera eine 3D-Kamera ist, deren Aufnahmefrequenz größer als oder gleich 30 Hz ist.

**Claims**

**1.** System for detecting the crossing of a goal line (3) of a goal frame (1) by a ball, said goal frame extending vertically above the goal line, a vertical plane, called the goal line plane (P), being defined from a rear edge of the goal line (3), which system is **characterized in that** it comprises:

- at least one lidar (4; 4a, 4b; 4c, 4d) arranged so as to scan, by means of a laser beam (L) and in a rotational movement, a vertical plane, called the detection plane (P1; P2), parallel to said goal line plane (P) and positioned behind the goal frame, said detection plane being located away from the goal line plane by a distance (d; d1, d2) that is smaller than the diameter (D) of the ball, said lidar generating a measurement signal, and
- a processing unit (5) for processing said measurement signal so as to detect the presence of a ball inside a zone, called the detection zone (Dl), of the detection plane delimited by the orthogonal projection of the goal frame onto the detection plane and to determine the position of the ball with respect to the goal line.

**2.** System according to Claim 1, **characterized in that** the distance (d) between the goal line plane (P) and the detection plane (P1; P2) is substantially equal to half the diameter (D/2) of the ball.

**3.** System according to Claim 1 or 2, **characterized in that** it comprises a lidar (4) centred with respect to the goal frame (1).

4. System according to Claim 3, **characterized in that** the scanning frequency of the lidar (4) is higher than or equal to 100 hertz.

5. System according to Claim 1 or 2, **characterized in that** it comprises n lidars (4a, 4b) scanning said detection plane (P1) and positioned in the ground, with $n \geq 2$.

6. System according to Claim 5, **characterized in that** the n lidars (4a, 4b) are distributed at regular intervals along a line parallel to the goal line.

7. System according to Claim 5 or 6, **characterized in that** the lidars (4a, 4b) are arranged so that their laser beams are out of phase by $\frac{2\pi}{n}$.

8. System according to any one of Claims 5 to 7, **characterized in that** the scanning frequency of each of the n lidars (4a, 4b) is higher than or equal to 100/n hertz.

9. System according to Claim 1 or 2, **characterized in that** it comprises at least first and second lidars (4c, 4d) that are capable of scanning first and second detection planes (P1, P2), respectively, each of said first and second detection planes being located away from the goal line plane by a specific distance (dl, d2) that is smaller than the diameter (D) of the ball.

10. System according to Claim 9, **characterized in that** the first and second lidars (4c, 4d) are centred with respect to the goal frame (1).

11. System according to Claim 9 or 10, **characterized in that** the first and second lidars (4c, 4d) are arranged so that their laser beams are synchronized.

12. System according to any one of Claims 9 to 11, **characterized in that** the scanning frequency of the first and second lidars (4c, 4d) is higher than or equal to 100 hertz.

13. System according to any one of the preceding claims, **characterized in that** it further comprises at least one camera (7) positioned behind the goal frame and connected to the processing unit (5), said at least one camera being arranged so as to capture images of the goal frame, and **in that** the processing unit (5) is arranged so as to process the one or more measurement signals from the one or more lidars and the images from said camera in order to detect the presence of a ball inside said detection zone.

14. System according to Claim 13, **characterized in that** said at least one camera is a high-speed video camera, the capture frequency of which is higher than or equal to 120 Hz.

15. System according to Claim 13, **characterized in that** said at least one camera is a 3D camera, the capture frequency of which is higher than or equal to 30 Hz.

**FIG.1**

**FIG.2**

EP 3 631 511 B1

**FIG.3**

**FIG.4**

**FIG.5**

**FIG.6**

**FIG.7**

**FIG.8**

**FIG.10**

**FIG.9**

**FIG.11**

**FIG.12**

EP 3 631 511 B1

## RÉFÉRENCES CITÉES DANS LA DESCRIPTION

**Documents brevets cités dans la description**

- DE 102007049147 A1